Europäisches Patentamt

European Patent Office

Office européen des brevets

(11) Publication number: **0 165 695**
**B1**

## EUROPEAN PATENT SPECIFICATION

(45) Date of publication of patent specification: **10.08.88**

(21) Application number: **85303273.8**

(22) Date of filing: **09.05.85**

(51) Int. Cl.⁴: **B 05 D 1/02,** B 05 B 7/10, G 11 B 5/72

(54) Spray coating moving tapes.

(30) Priority: **12.05.84 JP 95447/84**

(43) Date of publication of application:
**27.12.85 Bulletin 85/52**

(45) Publication of the grant of the patent:
**10.08.88 Bulletin 88/32**

(84) Designated Contracting States:
**AT BE CH DE FR GB IT LI LU NL SE**

(56) References cited:
**DE-A-2 250 383**
**DE-A-3 321 907**
**DE-B-2 263 487**
**GB-A-2 084 489**

(73) Proprietor: **FANETECH INSTITUTE LIMITED**
**9, 1-chome, Nihonbashi Honcho**
**Chuo-ku Tokyo (JP)**

(72) Inventor: **Hayashi, Kanji**
**10-2, 2-chome, Omori Honcho**
**Ota-ku Tokyo (JP)**

(74) Representative: **King, James Bertram**
**Herbert J.W. Wildbore 73 Farringdon Road**
**London EC1M 3JB (GB)**

Courier Press, Leamington Spa, England.

## Description

This invention relates to the spray coating of moving tapes or films and is primarily concerned with the provision of an anti-electrostatic coated film or silicone film on a tape.

It is known to provide an anti-electrostatic coating on the surface of a tape or film such as a magnetic tape and when applying such film to the tape under industrial conditions it is necessary for the process to be effected in a highly efficient manner.

Methods are known whereby very small droplets of the coating material in the form of a mist is produced utilising supersonic oscillators, the mist then being directed to the surface of the film. With such a method there are problems as follows.

A single oscillator is not able to produce the required volume of droplets so that a number of oscillators must be used to produce a sufficient quantity for industrial application. For example, with a single oscillator only about 0.1 litre per hour of droplets can be produced.

With the oscillator devices the liquid level must be very accurately controlled and any failure in the control leads to stoppage of the apparatus. For this reason known devices cannot be used over a long period of time and the costs are comparatively high. Furthermore the known apparatus cannot be used with liquids at high temperatures.

For the reasons mentioned above the method of spraying using a superonic oscillator cannot be applied in the case of silicone emulsion coatings or where an electrostatic inhibitor which is water soluble is to be sprayed in large volumes on to the surface of magnetic tape.

GB Specification 2084489A discloses a method and an apparatus of the type stated in the prior art part of independent claims 1 and 5. This known system is used for coating the surfaces of a recording member in the form of a disc with a thin film of lubricant and includes a chamber having a region which contains a supply of lubricant. Streams of air are passed through the lubricant in the region causing the lubricant to atomize and form droplets. The droplets of the lubricant are supported in the chamber by the flow of air coming from the lubricant. The air carrying the droplets of lubricant flows to a nozzle which directs the droplets of lubricant against the surface of the disc which is moved past the nozzle. The system can be provided with a pair of nozzles between which the disc passes to permit coating both surfaces of the disc with the lubricant simultaneously.

It is an object of this invention to provide a method of spraying in the liquid state and continuously on to the surface of a tape moving at high speed using a compact construction of apparatus whereby a uniform coated film is produced.

According to this invention there is provided a method for the spray coating of a film of droplets from a liquid on to a recording member in a coating chamber in which coating liquid from a liquid supply zone is sprayed against impingement means upstream of the coating chamber and excess coating liquid falls into the liquid supply zone, characterised in that the recording member is a moving tape and the coating liquid is jetted horizontally from a spray nozzle against impingement means constituting a vertical impingement plate provided with apertures whose size is such that droplets smaller than 10 microns are swept away through these apertures and up into an accumulator chamber whereas the larger droplets produced by the spray impinge upon the impingement plate and are liquefied and fall into the liquid supply zone, the droplets in the accumulator chamber being given kinetic energy and sprayed on to the surface of the moving tape.

This invention also provides an apparatus for the spray coating of a film of droplets from a liquid on to a recording member in a coating chamber including a tank containing liquid to be sprayed and a spray nozzle fed with compressed air to draw liquid from the tank and spray same in the form of an atomised jet, impingement means upstream of the coating chamber against which coating liquid is adapted to be sprayed and recirculating means characterised in that the apparatus is adapted to coat a moving tape with a liquid film by means of the spray nozzle and includes as impingement means an impingement plate provided with apertures whose size is such that droplets smaller than 10 microns will be swept away through these apertures and up into an accumulator chamber and thereafter conveyed to a channel through which the tape is adapted to move, whereas the larger droplets produced by the spray will impinge upon the impingement plate and will be liquefied and fall into the tank, and the recirculating means constituting means to convey the droplets from the accumulator chamber through the channel and back to the vicinity of the spray nozzle.

In order to explain the invention in more detail reference is made to the accompanying drawings showing embodiments by way of example only.

In the drawings:—

Figure 1 shows a spraying device according to the invention in sectional view for applying a liquid to both sides of a moving tape, and

Figure 2 shows the spray and impingement plates in greater detail.

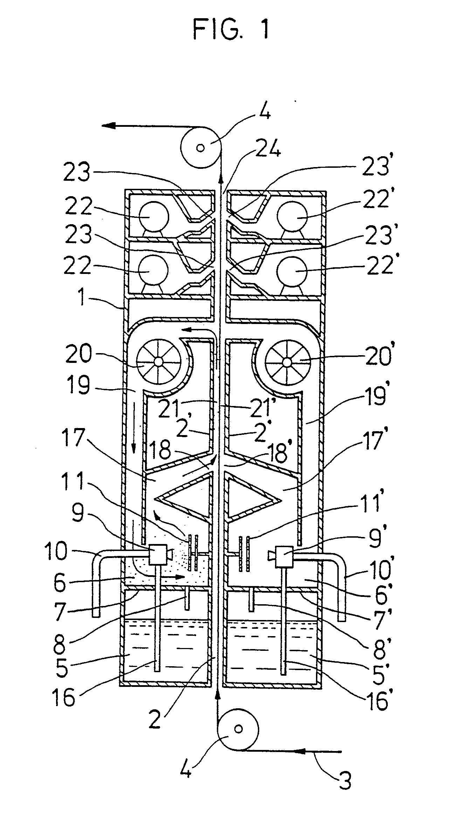

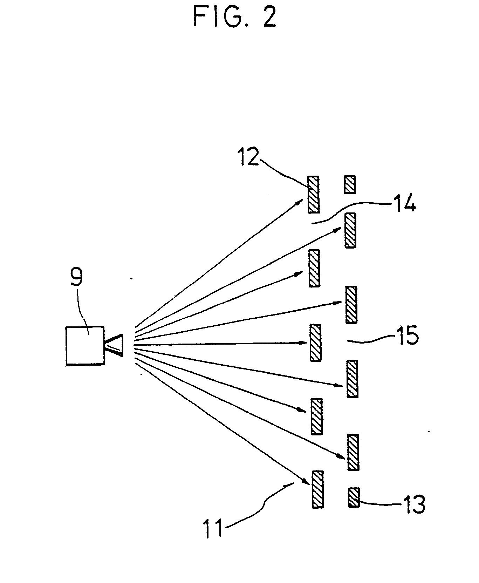

Referring to the drawings and in particular to Figure 1, apparatus 1 is provided having a centrally disposed channel 2 through which a tape 3 moves at high speed guided by rollers 4 at each end of the channel. The apparatus 1 includes two tanks 5 and 5' for containing the liquid to be sprayed, the tanks being located internally of the apparatus and at the bottom. The liquid is dispersed to produce a fine mist or spray of droplets within droplet producing chambers 6 and 6' which are located above the liquid tanks 5 and 5' and separated therefrom by partitions 7 and 7'. Liquid may drain back into the tanks via drain pipes 8 and 8'. Spray producing nozzles 9 and 9' are provided within the chambers 6 and 6', these being fed with compressed air at a pressure of 3 kg/cm² through pipes 10 and 10'. The liquid is drawn up into the spray nozzles by suction pipes 16, 16'. Spray from the nozzles 9 and 9' is caused to impinge on plates 11, 11' located within the spray chambers and these impingement plates comprise a front plate 12 and rear plate 13 as shown in Figure 2. The plates are provided with apertures 14 and 15 whereby the said apertures in the respective plates do not overlap. Liquid is drawn up through the pipe 16 by suction caused by the compressed air feed.

Positioned above the droplet producing chambers 6, 6' are accumulator chambers 17, 17' and within these the droplets are stored. The accumulator chambers feed slotted droplet jetting ports 18, 18' which pass through the wall of the channel 2 thereby allowing the droplets to enter the channel through which the tape 3 passes.

Compressed air supply channels 19, 19' are provided to feed compressed air so that same forces the droplets through the jetting ports 18, 18' from chambers 6, 6'. Blower fans 20, 20' are provided for production of compressed air to feed the said channels 19, 19'. The moving tape is coated within the coating chambers 21, 21' which are formed within the channel 2 and in this arrangement the channels 21, 21', channels 19, 19' and chambers 6, 6' form a circulation system for the coated droplets. At the upper end of the apparatus heated air is supplied by fans 22, 22', the hot air being exhausted into the drying chamber 24 at the upper end of the channel 2 through the outlets 23, 23'. This serves to dry the liquid coating which has adhered to the moving tape 3.

Operation of the device is as follows and for simplicity this is only described in relation to a one sided spraying. For spray coating both sides of the tape the apparatus can be considered as symmetrical and spray coating of the opposite side is effected in the same manner.

When compressed air is supplied at a pressure of 3 kg/cm² to the nozzle 9 through pipe 10 liquid to be sprayed is sucked up through pipe 16 and to this is imparted kinetic energy from the compressed air. The spray is directed against impingement plate 12 and small droplets in the form of a mist accumulate within the upper part of the chamber 12 and become stored in the accumulator chamber 17. Thus the concentration of particles in the accumulator is raised and in a typical embodiment more than 50% of the droplets have a size less than 10 microns ($\mu$) which is best suited to the spraying process. Any liquified spray falls to the bottom of chamber 6 and returns to tank 5 through drain 8.

The construction of impingement plate 12 as shown in Figure 2 is such that particles smaller than 10 microns are swept away by the air flow through the apertures 14 and 15, this resulting in an efficient generation of suitable size droplets.

The droplets stored within the accumulator tank 17 are sprayed on to the surface of the moving tape 3 by compressed air generated through fan 20, the spraying being effected through the jetting port 18. The droplets adhere to and are diffused over the surface of the tape by the holding effect of surface tension whereby an extremely thin film is built up on the tape 3. This film is stabilised on passage through the particle adhesion chamber 21 and is then dried in drying chamber 24. The surface tension of the spraying liquid needs to be adjusted to between 20 and 30 dyne/cm in order to produce small droplets less than 20 microns which are required to efficiently produce the uniform film.

In the invention as the small droplets are generated by jetting the liquid through a spray nozzle a large volume of mist can be produced. For example, the volume of spray produced by using a 50W supersonic oscillator is 0.1 litre per hour on a water basis, this can become from between 1 to 2 litres per hour when using the aforementioned spray system. In addition, suitable size droplets less than 10 microns in diameter can be produced with a ratio of 50% whereby the overall generated volume of droplets can be five to ten times greater than that of the supersonic oscillator system. The larger particles produced by the spray are liquified and returned back to the tank to be recirculated, this condensation being effected against the impingement plates whilst the small diameter droplets tend to float away on the moving airstream to be lifted into the accumulator tank 17. The droplets to be sprayed are therefore very small and of uniform diameter enabling a very uniform and thinnest possible coating to be provided on the tape 3.

As the fine particles which have been produced by jetting through the spray system have been adjusted to the droplet diameter less than a certain size using the impingement plate and then stored inside the accumulator tank, the particles can be adjusted in concentration.

Consequently, a uniformly coated film can be formed and at the same time the film thickness can be adjusted freely through the adjustment of concentration. Since the fine particles inside the accumulator tank are forcibly jetted against the tape by utilising the compressed air, a favourable adhesion of fine particles can be achieved using this kinetic energy. The adhesion to the tape moving at a high speed proves favourable.

Because of the spray system, the temperature of the droplets can be raised by using an elevated temperature spray liquid and the drying time can be shortened after the spraying process. Since the droplets can be adhered to the tape moving at a high speed and the uniform coated film can be built up thereon because of the aforesaid effects, it offers the advantage of producing industrially large quantities, for example of silicone coating. The speed in the case of spraying the electrostatic inhibitor water solution on to a plastic tape of 70 cm width using a 50W supersonic oscillator device is 50 m/min maximum. A speed of 200 m/min can be achieved by using the method of this invention.

## Claims

1. A method for the spray coating of a film of droplets from a liquid on to a recording member in a coating chamber (21, 21') in which coating liquid from a liquid supply zone (5, 5') is sprayed against impingement means (11, 11') upstream of the coating chamber (21, 21') and excess coating liquid falls into the liquid supply zone (5, 5'), characterised in that the recording member is a moving tape (3) and the coating liquid is jetted horizontally from a spray nozzle (9, 9') against impingement means (11, 11') constituting a vertical impingement plate (11, 11') provided with apertures (14, 15) whose size is such that droplets smaller than 10 microns are swept away through these apertures (14, 15) and up into an accumulator chamber (17, 17') whereas the larger droplets produced by the spray impinge upon the impingement plate (11, 11') and are liquefied and fall into the liquid supply zone (5, 5'), the droplets in the accumulator chamber (17, 17') being given kinetic energy and sprayed on to the surface of the moving tape (3).

2. Method in accordance with Claim 1, wherein two impingement plates (12, 13) are provided vertically disposed and one behind the other, the plates (12, 13) having apertures (14, 15) which do not overlap.

3. Method in accordance with Claim 1 or Claim 2, wherein the surface tension of the liquid is adjusted prior to spraying.

4. Method in accordance with any preceding claim, wherein droplets from the accumulator chamber (17, 17') are projected on to the moving tape (3), an air blower (20, 20') being provided to recirculate the droplets and impart kinetic energy thereto.

5. An apparatus for the spray coating of a film of droplets from a liquid on to a recording member in a coating chamber (21, 21') including a tank (5, 5') containing liquid to be sprayed and a spray nozzle (9, 9') fed with compressed air to draw liquid from the tank (5, 5') and spray same in the form of an atomised jet, impingement means (11, 11') upstream of the coating chamber (21, 21') against which coating liquid is adapted to be sprayed and recirculating means characterised in that the apparatus is adapted to coat a moving tape (3) with a liquid film by means of the spray nozzle (9, 9') and includes as impingement means (11, 11') an impingement plate (11, 11') provided with apertures (14, 15) whose size is such that droplets smaller than 10 microns will be swept away through these apertures (14, 15) and up into an accumulator chamber (17, 17') and thereafter conveyed to a channel (21, 21') through which the tape (3) is adapted to move, whereas the larger droplets produced by the spray will impinge upon the impingement plate (11, 11') and will be liquefied and fall into the tank (5, 5'), and the recirculating means constituting means (19, 20, 19', 20') to convey the droplets from the accumulator chamber (17, 17') through the channel (21, 21') and back to the vicinity of the spray nozzle (9, 9').

## Patentansprüche

1. Verfahren zum Sprühbeschichten eines Aufzeichnungsträgers mit einem Film aus Flüssigkeitströpfchen in einer Beschichtungskammer (21, 21'), in der eine Beschichtungsflüssigkeit aus einer Flüssigkeits-Speisezone (5, 5') gegen eine stromaufwärts der Beschichtungskammer (231, 21') befindliche Pralleinrichtung (11, 11') gesprüht wird und überschüssige Beschichtungsflüssigkeit in die Flüssigkeits-Speisezone (5, 5') fällt, dadurch gekennzeichnet, daß der Aufzeichnungsträger ein bewegtes Band (3) ist und die Beschichtungsflüssigkeit aus einer Sprühdüse (9, 9') horizontal gegen die Pralleinrichtung (11, 11') gestrahlt wird, die von einer vertikalen Prallplatte (11, 11') mit Ausnehmungen (14, 15) gebildet ist, deren Größe derart bemessen ist, daß Tröpfchen, die kleiner als 10 µ sind, durch diese Ausnehmungen (14, 15) ausgetragen und aufwärts in eine Sammelkammer (17, 17') geleitet werden, wogegen die beim Sprühen entstehenden größeren Tröpfchen auf die Prallplatte (11, 11') auftreffen, verflüssigt werden und in die Flüssigkeits-Speisezone (5, 5') fallen, wobei die Tröpfchen in der Sammelkammer (17, 17'), denen eine kinetische Energie verliehen worden ist, auf die Oberfläche des bewegten Bandes (3) aufgesprüht werden.

2. Verfahren nach Anspruch 1, dadurch gekennzeichnet, daß zwei vertikal und hintereinander angeordnete Prallplatten (12, 13) vorgesehen sind, deren Ausnehmungen (14, 15) einander nicht überlappen.

3. Verfahren nach Anspruch 1 oder 2, dadurch gekennzeichnet, daß die Oberflächenspannung der Flüssigkeit vor dem Aufsprühen eingestellt wird.

4. Verfahren nach den Ansprüchen 1 bis 3, dadurch gekennzeichnet, daß die Tröpfchen aus der Sammelkammer (17, 17') auf das bewegte Band (3) geschleudert werden, und daß ein Luftgebläse (20, 20') vorgesehen ist, das zur Rückführung der Tröpfchen und dazu dient, den Tröpfchen kinetische Energie zu verleihen.

5. Vorrichtung zum Sprühbeschichten eines Aufzeichnungsträgers mit einem Film aus Flüssigkeitströpfchen in einer Beschichtungskammer (21, 21'), mit einem die zu versprühende Flüssigkeit enthaltenden Tank (5, 5') und einer Sprühdüse (9, 9'), der Druckluft zum Abziehen der Flüssigkeit aus dem Tank (5, 5') und Versprühen derselben in Form eines zerstäubten Strahles zugeführt ist, einer Pralleinrichtung (11, 11'), die stromaufwärts der Beschichtungskammer (21, 21') angeordnet ist und gegen die die Beschichtungsflüssigkeit gesprüht wird, und einer Rückführeinrichtung, dadurch gekennzeichnet, daß die Vorrichtung zum Sprühbeschichten eines bewegten Bandes (3) mit einem Flüssigkeitsfilm mit Hilfe der Sprühdüse (9, 9') ausgebildet ist und als Pralleinrichtung (11, 11') eine Prallplatte (11, 11') mit Ausnehmungen (14, 15) aufweist, deren Größe derart bemessen ist, daß Tröpfchen, die kleiner als 10 μ sind, durch diese Ausnehmungen ausgetragen und aufwärts in eine Sammelkammer (17, 17') geleitet und danach in einen Kanal (21, 21') transportiert werden, durch den das Band (3) bewegt sind, wogegen die beim Sprühen entstehenden größeren Tröpfchen auf die Prallplatte (11, 11') auftreffen, verflüssigt werden und in den Tank (5, 5') fallen, und daß die Rückführeinrichtung Einrichtungen (19, 20, 19', 20') zum Transport der Tröpfchen aus der Sammelkammer (17, 17') durch den Kanal (21, 21') und zurück in die Nähe der Sprühdüse (9, 9') aufweist.

## Revendications

1. Procédé de revêtement par pulvérisation d'un film de gouttelettes d'un liquide sur un organe d'enregistrement, dans une chambre de revêtement (21, 21'), dans lequel un liquide de revêtement d'une zone (5, 5') d'alimentation en liquide est pulvérisé contre un dispositif de collision (11, 11') placé en amont de la chambre de revêtement (21, 21') et l'excès de liquide de revêtement retombe dans la zone d'alimentation en liquide (5, 5'), caractérisé en ce que l'organe d'enregistrement est une bande mobile (3) et le liquide de revêtement est projeté horizontalement par une buse de pulvérisation (9, 9') contre un dispositif de collision (11, 11') constituant une plaque verticale de collision (11, 11') ayant des ouvertures (15, 15') dont la dimension est telle que les gouttelettes de dimension inférieure à 10 microns sont entraînées par ces ouvertures (14, 15) et remontent dans une chambre d'accumulateur (17, 17') alors que les gouttelettes plus grosses formées par le choc de la pulvérisation sur la plaque de collision (11, 11') et liquéfiées tombent dans la zone d'alimentation en liquide (5, 5'), les gouttelettes de la chambre d'accumulateur (17, 17') recevant de l'énergie cinétique et étant pulvérisées à la surface de la bande mobile (3).

2. Procédé selon la revendication 1, dans lequel deux plaques de collision (12, 13) sont disposées verticalement l'une derrière l'autre, les plaques (12, 13) ayant des ouvertures (14, 15) qui ne se recouvrent pas.

3. Procédé selon l'une des revendications 1 et 2, dans lequel la tension superficielle du liquide est réglée avant pulvérisation.

4. Procédé selon l'une quelconque des revendications précédentes, dans lequel des gouttelettes provenant de la chambre d'accumulateur (17, 17') sont projetées sur la bande mobile (3), un ventilateur (20, 20') étant destiné à faire recirculer les gouttelettes et à leur donner de l'énergie cinétique.

5. Appareil de revêtement par pulvérisation d'un film de gouttelettes d'un liquide sur un organe d'enregistrement placé dans une chambre de revêtement (21, 21'), comprenant un réservoir (5, 5') qui contient un liquide à pulvériser et une base de pulvérisation (9, 9') alimentée en air comprimé afin qu'elle aspire un liquide dans le réservoir (5, 5') et le pulvérise sous forme d'un jet atomisé, un dispositif de collision (11, 11') placé en amont de la chambre de revêtement (21, 21') et contre laquelle le liquide de revêtement est destiné à être pulvérisé, et un dispositif de recirculation, caractérisé en ce que l'appareil est destiné à revêtir une bande mobile (3) d'un film de liquide à l'aide de la buse de pulvérisation (9, 9') et il comporte, comme dispositif de collision (11, 11'), une plaque de collision (11, 11') ayant des ouvertures (14, 15) dont la dimension est telle que les gouttelettes de dimension inférieure à 10 microns sont entraînées par les ouvertures (14, 15) et remontent dans une chambre d'accumulateur (17, 17') puis sont transportées vers un canal (21, 21') dans lequel la bande (3) est destinée à se déplacer, alors que les gouttelettes plus grosses formées par la pulvérisation frappent la plaque de collision (11, 11') et sont liquéfiées et tombent dans le réservoir (5, 5'), et le dispositif de recirculation constitue un dispositif (19, 20, 19', 20') destiné à transporter les gouttelettes de la chambre d'accumulateur (17, 17') dans le canal (21, 21') et à nouveau au voisinage de la buse de pulvérisation (9, 9').

FIG. 1

# FIG. 2